# EUROPÄISCHE PATENTSCHRIFT

(11) **EP 0 680 681 B1**
(45) Veröffentlichungstag und Bekanntmachung des Hinweises auf die Patenterteilung: **05.08.1998**
(21) Anmeldenummer: 95901421.8
(22) Anmeldetag: 23.11.1994
(51) Int. Cl.: H04N 1/047

(54) **Videoprojektionsgerät mit Polygonfehler mit Pyramidalfehlerkorrektur**
Videoprojector with polygonal error with pyramidal error correction
Dispositif de projection de video avec erreur polygonale avec compensation d'erreurs pyramidales

(30) Priorität: 23.11.1993 DE 4339908
(43) Veröffentlichungstag der Anmeldung: 08.11.1995
(73) Patentinhaber: LDT GmbH & Co. Laser-Display-Technologie KG, 07552 Gera (DE)
(72) Erfinder: VOGEL, Wolfgang, D-07747 Jena (DE); HILLER, Klaus, D-07551 Gera (DE); DETER, Christhard, D-07546 Gera (DE)
(74) Vertreter: Geyer, Werner, Dr.-Ing.
(86) Internationale Anmeldenummer: EP9403878
(87) Internationale Veröffentlichungsnummer: WO9515052

(56) Entgegenhaltungen:
- EP-A- 0 374 857
- DE-C- 4 306 797
- US-A- 4 180 822
- US-A- 4 829 175
- US-A- 5 235 438
- PATENT ABSTRACTS OF JAPAN vol. 15, no. 406 (P-1263) 16. Oktober 1991 & JP,A,03 163 412 (SONY) 15. Juli 1991
- PATENT ABSTRACTS OF JAPAN vol. 12, no. 94 (E-593) 26. März 1988 & JP,A,62 025 067 (SEIKO EPSON) 3. Oktober 1987
- PATENT ABSTRACTS OF JAPAN vol. 10, no. 243 (P-489) 21. August 1986 & JP,A,61 073 917 (16-4-86) 16. April 1986

## Beschreibung

Die Erfindung betrifft ein System zum Pyramidalfehlerausgleich bei Fehlneigung von Facettenflächen bei einem lichtbeaufschlagten rotierenden Polygonspiegel, der zur Ablenkung eines Lichtbündels dient und bei dem bei Auftreten einer Fehlneigung einer Facettenfläche eine Korrekturablenkung des von der betreffenden Facettenfläche reflektierten Lichtbündels um einen Korrekturwinkel in einer zur Ablenkung durch die Fehlneigung entgegengesetzten Richtung vorgenommen wird. Weiter betrifft die Erfindung eine Vorrichtung mit einem lichtbeaufschlagten rotierenden Polygonspiegel zur Ablenkung eines Lichtbündels über Facettenflächen, mit einer Ablenkeinrichtung zur Korrekturablenkung des Lichtbündels bei Fehlneigung einer Facettenfläche um einen Korrekturwinkel in einer der Fehlneigung entgegengesetzten Richtung und mit einer Steuereinrichtung, mittels derer die Ablenkeinrichtung zur Ausführung der Korrekturablenkung ansteuerbar ist.

Beim Drucken mit Laserlicht oder bei Videoprojektionssystemen, werden üblicherweise Lichtbündel mit Hilfe von Spiegeln abgelenkt. Unter anderem werden dabei Schwenkspiegel und rotierende Polygonspiegel verwendet.

Ein rotierender Polygonspiegel gestattet sehr schnelle Ablenkungen, wie sie beim Laserdruck oder zur Erzeugung der zeilenmäßigen Ablenkung bei einem Videobild benötigt werden. Ein Polygonspiegel weist in gleichem Abstand von der Rotationsachse mehrere spiegelnde Facetten auf, auf die das abzulenkende Lichtbündel nacheinander auftrifft und aufgrund des unterschiedlichen Auftreffwinkel von jeder Facette jeweils rasternd abgelenkt wird. Die Vielzahl von Facetten gestattet eine vielfache Rasterung pro Umdrehung des Polygonspiegels. Die Rotationsgeschwindigkeit und die Anzahl der Facetten bestimmen also, wie schnell eine Ablenkung wiederholt werden kann. Der Winkel des auffallenden Lichtbündels und die Größe der Facette legen dabei den abgerasterten Winkelbereich fest.

Polygonspiegel weisen aufgrund des Fertigungsprozesses Fehler auf. Einer dieser Fehler ist der sogenannte Pyramidalfehler, der die Abweichung der Parallelität einer beliebigen Facettenebene des Polygonspiegels zur Drehachse des Polygonspiegels charakterisiert. Dieser Fehler ändert sich im allgemeinen von Facettenfläche zu Facettenfläche, und es entsteht senkrecht zur Rasterrichtung eine Winkelabweichung des jeweils von einer Facettenfläche reflektierten Lichtbündels gegenüber der vorhergehenden Facettenfläche. In einem Videoprojektionssystem bewirkt dieser Pyramidalfehler, daß die Abstände von Zeile zu Zeile ungleichmäßig sind. Die unterschiedlichen Abstände weisen dann eine Periode mit der Anzahl der Facetten des Polygondrehspiegels auf und dem Betrachter erscheint eine deutliche Streifenstruktur in der Bildebene eines Videoprojektionssystems.

Die Patentanmeldung JP-A-03 163 412 zeigt ein Bildprojektionssystem mit einer intensitätsmäßig steuerbaren Lichtquelle zur Aussendung eines Lichtbündels und einer Ablenkeinrichtung mit der das Lichtbündel zeilen- und bildmäßig gerastert wird, und mit einem Polygonspiegel mit dem eine zeilenmäßige Ablenkung des Lichtbündels über Facettenflächen des Polygonspiegels bewirkt wird, eine Meßeinrichtung, mit der laufend die Ausrichtung jeder Facettenfläche beim Vorbeilauf an einer Meßstelle überprüfbar, bei Auftreten einer Fehlneigung deren Winkel bestimmbar und abhängig von diesem ein Eingangssignal an die Steuereinrichtung abgebbar ist, mit einer Steuereinrichtung, mittels derer die Ablenkeinrichtung zur Ausführung der Korrekturablenkung ansteuerbar ist, und einem Funktionsgenerator, der eine elektrische Ausgangsgröße für einen vorgegebenen Winkel zur bildmäßigen Ablenkung des Lichtbündels erzeugt.

In dem Buch "Laser in der Druckindustrie" von Werner Hülsbusch, Hülsbusch Verlag 1990, S. 227 sind zwei Verfahren dargestellt, um die unerwünschte Strahlablenkung aufgrund des Pyramidalfehlers zu kompensieren. Bei beiden Verfahren wird die Korrektur mit Hilfe einer Korrekturablenkung durchgeführt.

Im ersten Verfahren wird zur Korrekturablenkung eine speziell geschliffene Linse verwendet, vor welcher der Polygonspiegel rotiert. Für die Herstellung dieser Linse wird jeder Polygonspiegel vermessen und die Linse zur Korrektur des Pyramidalfehlers speziell geschliffen. Dieses Verfahren ist sehr aufwendig und eignet sich wenig für die Massenfertigung.

Beim zweiten beschriebenen Verfahren wird die Korrekturablenkung durch eine akusto-optisch arbeitende Ablenkeinrichtung durchgeführt. Die mit dieser Ablenkeinrichtung eingestellten Winkel für die Korrekturablenkung werden von einem Korrektursignalgenerator erzeugt. Dieser gibt je nach der Fehlneigung jeder Facette die Korrektursignale vor, die nach Fertigung bei jedem Polygonspiegel separat ausgemessen wurden und im Korrektursignalgenerator als gespeicherter Datensatz vorliegen. Mit einer speziellen Anordnung wird ein Signal für die Position jeder Facette gewonnen und zum Auslesen gespeicherter Korrektursignalwerte der momentan aktiven Facettenfläche synchronisiert.

Nachteilig bei beiden Verfahren ist, daß jeweils eine jedem Polygonspiegel angepaßte Vorrichtung zum Ausgleich des Pyramidalfehlers verwenden werden muß, wobei die Anpassung durch einen speziell geschliffenen Spiegel oder abgespeicherten Datensatz erfolgt, was bei serienmäßiger Fertigung eine große Erschwernis ist und einen zusätzlichen Aufwand zur Vermessung der Facettenflächen erfordert. Im zweiten Verfahren ist zudem noch eine spezielle Anordnung notwendig, damit die geeigneten Korrekturwerte mit der jeweils aktiven Facette synchronisiert sind.

Der Erfindung liegt die Aufgabe zugrunde, ein System zur Pyramidalfehlerkorrektur zu schaffen, das im Vergleich zu bisher bekannten Systemen deutlich vereinfacht ist und gleichzeitig zu einem verbesserten Fehlerausgleich führt.

Diese Aufgabe wird bei einem gattungsgemäßen System dadurch gelöst, daß beim Vorbeilauf der Facettenflächen an einer Meßstelle laufend deren Ausrichtung überprüft und beim Auftreten einer Fehlneigung deren Winkel bestimmt sowie in doppelter Größe als Korrekturwinkel der Korrekturablenkung eingestellt wird.

Die bei der Erfindung eingesetzte direkte Messung der Ausrichtung der Facettenflächen ergibt den Vorteil, daß der Polygonspiegel serienmäßig gefertigt und unabhängig von seinen unterschiedlichen Facettenneigungen eingesetzt werden kann. Unter anderem erleichtert dies die Wartung, da bei Ersatz des Polygonspiegels oder des ihn antreibenden Motors keine spezielle Justierung mehr erforderlich ist. Weiter werden Änderungen in der Mechanik, z.B. ein Taumeln durch Verschleiß von Lagern, Verlagerungen in der Rotationsachse aufgrund von thermischer Ausdehnung oder auch von außen einwirkender Stöße, infolge der direkten Messung mitausgeglichen. Durch Ausschaltung auch dieser Fehlermöglichkeiten ergibt sich beim erfindungsgemäßen Verfahren ein wesentlich verbesserter, so gut wie vollständiger Pyramidalfehlerausgleich.

Das erfindungsgemäße System ist technisch wenig aufwendig und benötigt weder kompliziert geschliffene, mit dem Polygonspiegel rotierende Linsen, noch eine zusätzliche Elektronik, um die Korrekturwerte aus einem Datensatz mit der jeweils ablenkenden Facette zu synchronisieren, vor allem, wenn die Messung jeweils an derselben Facette durchgeführt wird, die auch das Lichtbündel ablenkt.

Die Bestimmung der Fehlneigung kann beim erfindungsgemäßen System auf verschiedene Weise erfolgen, beispielsweise elektromechanisch oder elektronisch, z.B. über eine Kapazitätsmessung der Facettenfläche gegenüber einer Elektrode. Gemäß einer bevorzugten Weiterbildung wird der Winkel einer Fehlneigung an der Meßstelle optisch bestimmt. Das hat gegenüber anderen Meßverfahren den Vorteil, daß Kalibrierungsungenauigkeiten oder andere systematische Fehler vernachlässigbar werden, da sich entsprechende Störungen auf das bei der Messung verwendete Licht in gleicher Weise wie auf das abzulenkende Lichtbündel auswirken und durch die Korrekturablenkung im wesentlichen kompensiert werden.

In einer vorzugsweisen Weiterbildung des erfindungsgemäßen Systems wird die Korrekturablenkung nach der Ablenkung des Lichtbündels über den Polygonspiegel durchgeführt. Dadurch wird vermieden, daß das Lichtbündel aufgrund der Ablenkung auf jeweils unterschiedliche Bereiche einer Facette fällt, was bei einer eventuell vorhandenen Krümmung in der Facettenebene zu einer zusätzlichen Abweichung führen würde.

Gemäß einer bevorzugten Weiterbildung der Erfindung liegt die jeweils an der Meßstelle überprüfte Facette in Rotationsrichtung vor der Facette, an der die Ablenkung erfolgt, wobei als Ergebnis der Messung eine Steuergröße, insbesondere eine Spannung oder ein Strom, zur Einstellung der Korrekturablenkung gewonnen und um die Zeit verzögert abgegeben wird, welche die Facette bei Rotation des Polygonspiegels zum Durchlaufen der Strecke von der Meßstelle zu dem Ort, an dem die Ablenkung über den Polygonspiegel erfolgt, benötigt. Hierbei wird an einer anderen Facette gemessen als an der, welche die Ablenkung des Lichtbündels bewirkt. Das hat den Vorteil, daß die Messung wesentlich weniger von Streulicht, beispielsweise durch Staub auf der ablenkenden Facette, beeinflußt werden kann, womit die erreichbare Meßgenauigkeit und die damit zusammenhängende Genauigkeit für den Pyramidalfehlerausgleich erhöht wird. Ferner können durch Messungen vor dem Ort des Aufbringens der Korrekturablenkung auch Laufzeitunterschiede in einer bei dem Verfahren verwendeten Elektronik leichter ausgeglichen werden.

Die Erfindung bezieht sich ferner auch auf eine Vorrichtung mit einem lichtbeaufschlagten rotierenden Polygonspiegel zur Ablenkung eines Lichtbündels über Facettenflächen, mit einer Ablenkeinrichtung zur Korrekturablenkung des Lichtbündels bei Fehlneigung einer Facettenfläche um einen Korrekturwinkel in einer der Fehlneigung entgegengesetzten Richtung und mit einer Steuereinrichtung zur Ansteuerung der Ablenkeinrichtung zur Ausführung einer Korrekturablenkung.

Erfindungsgemäß ist dabei eine Meßeinrichtung vorgesehen, mit der laufend die Ausrichtung jeder Facettenfläche beim Vorbeilauf an einer Meßstelle überprüfbar, bei Auftreten einer Fehlneigung deren Winkel bestimmbar und abhängig von diesem ein Eingangssignal an die Steuereinrichtung abgebbar ist, von dem die Korrekturablenkung in doppelter Größe des Winkels der festgestellten Fehlneigung abgeleitet wird.

Gemäß einer vorteilhaften Weiterbildung der erfindungsgemäßen Vorrichtung sind ein Funktionsgenerator, der eine elektrische Ausgangsgröße für einen vorgegebenen Winkel zur weiteren Ablenkung des Lichtbündels erzeugt, und zur Bildung einer Summengröße eine Addierschaltung vorgesehen, in der eine Steuergröße für die Einstellung der Korrekturablenkung zur elektrischen Ausgangsgröße des Funktionsgenerators addierbar und danach die Ablenkeinrichtung mit der Summengröße beaufschlagbar ist. Mit der Addierschaltung kann man die Ablenkeinrichtung zur Korrekturablenkung auch für definierte Ablenkungen, die beispielsweise durch einen Funktionsgenerator vorgegeben werden, einsetzen. Dies ist vor allem dann vorteilhaft, wenn der Polygonspiegel zur zeilenmäßigen Rasterung bei der Projektion eines Videobildes verwendet wird, da dann mit derselben Ablenkeinrichtung neben dem Polygonfehlerausgleich auch die bildmäßige Rasterung durchgeführt werden kann. Man spart damit in einem solchen Videoprojektionssystem eine zusätzliche Ablenkeinrichtung, zusätzliche Steuerungen und Elektronik. Der Funktionsgenerator gibt zur gleichmäßigen bildmäßigen Rasterung bei solchen Videoprojektionssystemen eine sägezahnförmige Ausgangsgröße ab.

Gemäß einer weiter bevorzugten Ausgestaltung der Erfindung enthält die Ablenkeinrichtung einen Schwenkspiegel mit elektrisch einstellbarem Schwenkwinkel und eine Treiberschaltung zu dessen Steuerung. Damit wird gegenüber akusto-optischen Wandlern der Vorteil erreicht, daß über den Schwenkspiegel größere Ablenkwinkel erzielbar sind, was es besonders einfach macht, sowohl die Ablenkung für die bildmäßige Rasterung in einem Videoprojektionssystem, als auch die Korrekturablenkung zum Pyramidalfehlerausgleich über die gleiche Baugruppe, nämlich den Schwenkspiegel, durchzuführen. Derartige Schwenkspiegel sind kommerziell erhältlich und können auch mit einer speziell an den jeweiligen Spiegel angepaßten Treiberschaltung geliefert werden, die den Winkel steuert oder die bei einer genaueren Einstellung des Winkels die Winkelposition erfaßt und aufgrund eines Soll/lstwert-Vergleichs regelt.

Wenn die Treiberschaltung ein Regler ist oder diesen enthält, ist es besonders zweckmäßig, diesem Regler nicht nur ein proportionales Regelverhalten beizugeben, sondern auch die Trägheit des Schwenkspiegels in der Regelcharakteristik mit zu berücksichtigen. Deswegen ist in einer vorzugsweisen Weiterbildung der Erfindung vorgesehen, daß die Treiberschaltung einen PID-Regler aufweist, der den Schwenkwinkel in Abhängigkeit von einer Eingangsgröße als Sollwert regelt, wobei die Zeitkonstanten der 1- und D-Regelung an die mechanische Trägheit des Schwenkspiegels angepaßt sind. Ein solcher Regler ist in der Lage, dem Spiegel bei schnellen Winkeländerungen eine besonders große Beschleunigung zu geben bzw. eine Winkeländerung vorzeitig zu stoppen, wenn der Spiegel in die durch den Sollwert vergebene Position läuft, wodurch Effekte, die aufgrund der mechanischen Trägheit des Schwenkspiegels, beispielsweise als Regelverzögerung, auftreten können, minimiert werden. Weiter lassen sich derartige Regler auch zur Unterdrückung einer eventuellen, ungewollten Schwingung des Schwenkspiegels infolge der Ansteuerung auslegen.

Gemäß einer anderen vorzugsweisen Weiterbildung der erfindungsgemäßen Vorrichtung weisen der Schwenkspiegel und eine diesen ansteuernde Elektronik eine Grenzfrequenz auf, die mindestens doppelt so groß wie die Zeilenfrequenz ist. Die Regelgenauigkeit zum Ausgleich des Pyramidalfehlers hängt unter anderem auch von dem Zeitverhalten der zur Fehlerkompensation verwendeten Ablenkeinrichtung ab. Bei einem Videoprojektionssystem werden für das Rastern einer Zeile in der PAL-Norm 64 µs und in der künftigen HDTV-Norm 32 µs benötigt. Um eine Dämpfung aufgrund der mechanischen Eigenschaften des Schwenkspiegels bei der Einstellung möglichst gering zu halten, sollte die Grenzfrequenz und die Resonanzfrequenz von Regler und Schwenkspiegel möglichst hoch liegen. Bei ungefähr 30 kHz Grenzfrequenz wird beispielsweise in der HDTV-Norm gerade noch die erste Oberwelle zur Nachregelung durchgelassen, so daß bei einer Grenzfrequenz von ungefähr 30 kHz im Falle von HDTV eine zu große Nachregelungszeit für den Pyramidalfehler gegeben ist. Bei höheren Frequenzen als 60 kHz wird auch die zweite Oberwelle der Regelung berücksichtigt, was eine genauere Regelung gestattet. Im allgemeinen sollte die Grenzfrequenz des Schwenkspiegels mit seiner ihn ansteuernden Elektronik allerdings nicht zu hoch gewählt werden, damit der technische Aufwand für die zweite Ablenkung begrenzt bleibt. Die doppelte Zeilenfrequenz kann deshalb als Orientierungsgröße zur Auslegung einer erfindungsgemäßen Vorrichtung dienen.

In weiter bevorzugter Ausgestaltung der Erfindung enthält die Meßeinrichtung einen ein Meßlichtbündel aussendenden Laser, der so angeordnet ist, daß das Meßlichtbündel an der Meßstelle von jeder vorbeilaufenden Facette reflektiert wird. Laser eignen sich besonders für eine genaue optische Vermessung, da sie ein sehr paralleles Lichtbündel aussenden. Als Laser kann z.B. ein Miniaturdiodenlaser oder ein kleiner Helium-Neonlaser mit ungefähr 100 mW Leistung verwendet werden, die heute kostengünstig erhältlich sind.

In einer anderen bevorzugten Weiterbildung der erfindungsgemäßen Vorrichtung ist ein lichtempfindlicher Positionsdetektor so angeordnet, daß er das an einer vorbeilaufenden Facette reflektierte Meßlichtbündel zumindest zeitweise empfängt und dann zwei Spannungen erzeugt, deren Differenz eine Funktion der Facettenneigung ist. Derartige Positionsdetektoren bestehen aus einer oder mehreren Fotodioden, die sich über eine bestimmte Fläche erstrecken. Dabei wird an deren Enden jeweils eine Spannung abgegeben, die von der Position des auffallenden Lichtbündels abhängt, wobei der Bereich zwischen der beleuchteten Position und einem Ende einen positionsabhängigen Vorwiderstand bildet, so daß bei entsprechender Anpassung der nachfolgenden Elektronik Spannungen an den Anschlüssen abgenommen werden können, aus denen die Auftreffposition des Lichtbündels bestimmt werden kann. Trifft ein Lichtbündel in die Mitte eines derartigen Positionsdetektors auf, so sind üblicherweise die beiden Spannungen an den Enden gegenüber der Mitte des Detektors gleich groß, also ihre Differenz Null. Bei Abweichung von der Mitte erhöht sich die Spannung am einen Ende gegenüber dem anderen. Die Spannungsdifferenz ist somit eine Funktion der Abweichung des Auftreffpunktes des Lichtbündels von der Mitte des lichtempfindlichen Positionsdetektors. Je nach dem Raumwinkel, den der Positionsdetektor aufgrund seiner Fläche überdeckt, trifft das von einer vorbeilaufenden Facette reflektierte Meßlichtbündel zeitweise auf ihn auf. Dabei werden die beiden Spannungen oder deren Differenz zur späteren Korrektur gespeichert, wie dies noch weiter unten dargestellt wird.

Aufgrund dieser Weiterbildung ergibt sich so eine wenig aufwendige Meßvorrichtung für die Facettenneigung mit kommerziell leicht erhältlichen Bauelementen, die bei entsprechender Wahl der Geometrie der geometrischen Anordnung von Laser, Positionsdetektor und Polygonspiegel auch eine hohe Meßgenauigkeit für die Facettenneigung erlaubt.

In weiterer vorteilhafter Ausgestaltung der erfindungsgemäßen Vorrichtung ist der das Meßlichtbündel aussendende Laser so ausgerichtet, daß dieses in einer Ebene senkrecht zur Rotationsachse des Polygonspiegels mit einem von Null verschiedenen Winkel relativ zum Radius des Polygonspiegels im Auftreffpunkt des Meßlichtbündels auf der Facettenfläche verläuft. Dies ermöglicht eine hohe Meßgenauigkeit für die Messung der Facettenneigung, da bei großen Reflektionswinkeln der Anteil eines möglichen Streulichts des Lasers auf den Positionsdetektor verringert ist. Weiter wird durch den Einfall des Meßlichtbündels in einer Ebene senkrecht zur Rotationsachse sichergestellt, daß die vom Positionsdetektor abgegriffenen Spannungen sich als einfache Funktion der Fehlneigung ergeben und dadurch komplexere Umwandlungen in der nachgeschalteten Elektronik vermieden werden. Die Funktion, welche die Abhängigkeit der Spannung vom Korrekturwinkel beschreibt, ist dann vor allen Dingen symmetrisch bezüglich des Vorzeichens des Winkels der Fehlneigung, so daß in der nachfolgenden Elektronik keine unterschiedliche Behandlung für positive und negative Fehlneigungen vorgesehen werden muß.

Bevorzugt wird dabei der lichtempfindliche Positionsdetektor relativ zum Polygonspiegel und zum Laser so angeordnet, daß ein die Differenzspannung Null am Positionsdetektor erzeugendes, an einer Facette reflektiertes Meßlichtbündel, mit dem vom Laser ausgehenden Meßlichtbündel einen Winkel von 90° ± 10° einschließt. Auch hierdurch läßt sich eine hohe Meßgenauigkeit für die Facettenneigung sicherstellen, da eventuell auftretendes Streulicht, beispielsweise infolge Streuung an Staubpartikeln, wegen des Winkels von 90° nur mit einer geringen Intensität auf den Positionsdetektor fallen kann. Dadurch wird auch die Reproduzierbarkeit der Meßergebnisse über der Zeit verbessert, da sich Streuungen aufgrund von Staub zeitlich ändern können.

Der Durchmesser des vom Laser erzeugten Meßlichtbündels beträgt bevorzugt zwischen dem 1,5- und dem 0,5-fachen des Fokus auf der ablenkenden Facette des am Polygonspiegel abgelenkten Lichtbündels. Das Meßlichtbündel und das vom Polygonspiegel abzulenkende Lichtbündel erfassen dann ungefähr gleiche Flächenbereiche der Facette, so daß sich ein mit dem Polygonfehler gleichwirkende Ablenkfehler, beispielsweise aufgrund einer durch das Schleifen des Polygonspiegels entstandene Wölbung, nur minimal auswirken kann. Hierdurch läßt sich somit die erreichbare Qualität der Abbildung verbessern.

Gemäß einer weiteren vorzugsweisen Ausgestaltung der Erfindung ist der Laser so ausgerichtet, daß das Zentrum des von ihm ausgehenden Meßlichtbündels an einem Facettenpunkt auftrifft, der innerhalb eines Flächenbereiches der Facette liegt, innerhalb dessen nachfolgend auch das abzulenkende Lichtbündel reflektiert wird. Dadurch wird sichergestellt, daß praktisch derselbe Bereich der Facette vermessen wird, auf den auch das abzulenkende Lichtbündel auftrifft. Fehler, die aufgrund einer Unebenheit der Facette, beispielsweise aufgrund einer durch das Schleifen entstandenen Wölbung, auftreten können, werden dadurch weitgehend ausgeglichen.

Gemäß einer bevorzugten Weiterbildung ist der Laser so angeordnet, daß die den jeweiligen Meßort enthaltende Facette in einem Winkel von 90° ± 45° in Rotationsrichtung vor der das Lichtbündel ablenkenden Facette liegt, und ferner ist in der Steuereinrichtung eine Verzögerungsschaltung vorgesehen, welche die Abgabe der Steuergröße um eine Zeit verzögert, die im wesentlichen gleich der Zeit ist, die eine Facette benötigt, um infolge der Rotation des Polygonspiegels von der Meßstelle zum Auftreffort des primären Lichtbündels zu gelangen. Dadurch wird der Streulichteinfall vom abzulenkenden Lichtbündel auf die Meßeinrichtung gering gehalten, was zu einer höheren Meßgenauigkeit führt und auch den Einsatz eines Lasers mit geringer Leistung gestattet.

Bevorzugt weist die Verzögerungsschaltung eine Verzögerungsleitung mit fester Verzögerungszeit auf. Solche Verzögerungsleitungen werden beispielsweise in der Farbfernsehtechnik (PAL und SECAM) verwendet, um Phasenverschiebungen bei der Signalübertragung zu kompensieren. Sie werden heute kostengünstig in Serie gefertigt und sind gut verfügbar. Dabei werden insbesondere Ultraschallverzögerungsleitungen verwendet, die eine Verzögerungszeit von einigen Mikrosekunden bis einigen Millisekunden erlauben, was bei einem Videoprojektionssystem ausreicht, entsprechend der Zeit zur Rotation einer Facette von der Meßstelle zu dem Ort, an dem das primäre Laserlichtbündel abgelenkt werden soll, zu verzögern. Ganz besonders bevorzugt umfaßt dabei die Verzögerungsschaltung eine digitale Schaltung, was variable Verzögerungszeiten zuläßt und dadurch eine bessere Synchronisierung ermöglicht. Eine digitale Verzögerungsschaltung kann man ebenfalls mit Hilfe von Standardelektronik verwirklichen. Beispielsweise kann die von der Meßeinrichtung und der Steuereinrichtung gewonnene Steuergröße für die Ablenkeinrichtung analog/digital gewandelt und über ein Schieberegister verzögert werden, wonach die Steuergröße nachfolgend durch einen Digital-Analogwandler wieder in einen Analogwert zurückgewandelt wird. Ähnlich kann man die Verzögerung auch digital mit einem FIFO (first in, first out)-Speicher durchführen. Alle derartigen Schaltungen können mit herkömmlicher Elektronik, insbesondere handelsüblichen integrierten Schaltungen, verwirklicht werden.

Eine bevorzugte Weiterbildung der Erfindung besteht dabei darin, die Verzögerung selbst digital zu schalten. Hierzu wird eine Sample- and -Hold-Schaltung vorgesehen, bei der die zeitlich aufeinanderfolgend abzugebenden Steuergrößen jeweils an einer von mehreren Speicherstellen abgespeichert werden, wenn ein Eingangsübergabesignal anliegt, und aus der Speicherstelle die jeweils zur optischen Korrektur des Neigungswinkels benötigte Steuergröße ausgegeben wird, wenn ein Ausgangsübernahmesignal anliegt, wobei dieses gegenüber dem Eingangsübergabesignal mit Hilfe einer digitalen Schaltung verzögert ist. Hierbei ist der Aufwand gegenüber den vorerwähnten digitalen Schaltungen deutlich kleiner. Eine Sample- and -Hold-Schaltung weist üblicherweise Kondensatoren auf, in denen Spannungen über eine gewisse Zeit gehalten und die aufgeladen werden, wenn ein Eingangsübergabesignal die am Eingang anliegende Steuergröße zum Laden des Kondensators durchschaltet. Entsprechend wird jeder als Speicherstelle dienende Kondensator durch eine weitere logische Verknüpfung mit dem Ausgang verbunden, wenn ein entsprechendes Ausgangsübernahmesignal anliegt. Bei Verzögerung des Ausgangsübernahmesignals zum Eingangsübergabesignal ergibt sich auch durch diese Schaltung eine Verzögerung, wobei die Steuergrößen nicht mehr digital/analog und analog/digital gewandelt werden müssen.

Für derartige digital arbeitende Verzögerungsschaltungen sind Taktimpulse nötig, die das jeweilige Speichern und Ausgeben steuern. Gemäß einer bevorzugten Weiterbildung der Erfindung enthält die Vorrichtung eine Takterzeugungsschaltung, welche die Taktimpulse zur digitalen Verzögerung aus der Summenspannung der beiden Spannungen eines lichtempfindlichen Positionsdetektors erzeugt, bei dem die Differenz der beiden Spannungen eine Funktion der Facettenneigung ist. Wenn der Positionsdetektor so schmal ist, daß nur bei einem bestimmten Rotationswinkel ein reflektiertes Meßlichtbündel auf ihn auftrifft, dann kann er auch dazu verwendet werden, ein Signal zu erzeugen, das anzeigt, daß eine bestimmte Facette in einer bestimmten Winkelposition ist, und das dann als Taktimpuls zur Synchronisation der Verzögerung eingesetzt werden kann. Die Verwendung der Summenspannung der Spannungen eines lichtempfindlichen Positionsdetektors als dieses Signal bietet den Vorteil, daß ein solches Signal praktisch unabhängig von der Fehlneigung einer Facette nur das Zeitverhalten für den Durchlauf einer Facette an der Meßstelle anzeigt. Dies führt zu einem besonders geringen elektronischen Aufwand bei der Synchronisation der Spiegeldrehung mit der Verzögerung.

Für ein besseres Zeitverhalten und einer genaueren Zeitsteuerung aufgrund der beschriebenen Taktimpulse wird bei der direkten Verwendung dieser Taktimpulse eine eventuelle unterschiedliche Pulsgröße oder Untergrund aufgrund von Streulicht zu erwarten sein, so daß die Verzögerung in einem begrenzten Bereich unexakt ist. Deshalb sieht eine Weiterbildung der Erfindung vor, daß die Takterzeugungsschaltung auch eine Pulsformschaltung, insbesondere unter Verwendung eines Komparators oder eines Schmitt-Triggers, aufweist. Infolge der mit Komparatoren und Schmitt-Triggern erzeugten Rechteckimpulse mit steiler Flanke läßt sich die Genauigkeit der Verzögerung und der digitalen Elektronik stark erhöhen. Dabei hat ein Komparator gegenüber einem Schmitt-Trigger auch noch den Vorteil, daß die Flanken durch Veränderung des Vergleichswerts einstellbar sind und dadurch die Elektronik dem Gerät bzw. der Lage des Positionsdetektors so angepaßt werden kann, daß Toleranzen im mechanischen Aufbau kompensiert werden können.

Die Erfindung wird nachfolgend anhand der Zeichnung beispielshalber im Prinzip noch näher erläutert. Es zeigen:
Fig. 1 die Prinzipdarstellung eines Videoprojektionssystems zur Zeilenablenkung mittels eines Polygonspiegels, bei dem das erfindungsgemäße Verfahren zum Pyramidalfehlerausgleich unter Einsatz einer erfindungsgemäßen Vorrichtung angewendet wird;
Fig. 2 eine Steuerelektronik für die erfindungsgemäße Vorrichtung aus Fig. 1;
Fig. 3 Signalverläufe in der Steuerelektronik nach Fig. 2 zur Veranschaulichung des erfindungsgemäßen Verfahrens.

Nachfolgend wird das erfindungsgemäße System hier beispielhaft anhand eines Videoprojektionssystem beschrieben, bei dem das System besonders vorteilhaft eingesetzt werden kann. In völlig gleicher Weise läßt sich das Verfahren zum Pyramidalfehlerausgleich jedoch auch auf anderen technischen Gebieten anwenden, beispielsweise bei Lichtstrahloszillographen oder beim Drucken in der Laserdrucktechnik.

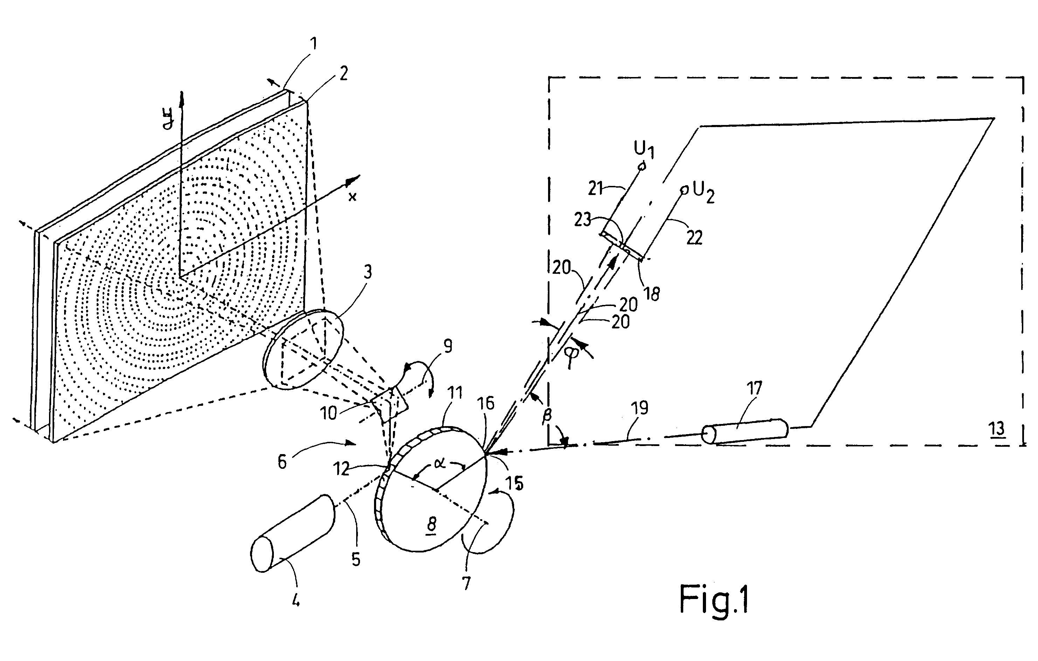

In dem in Fig. 1 ganz prinzipiell dargestellten Videoprojektionssystem wird auf einen Schirm 1 ein Videobild mit Hilfe einer Fresnellinse 2 und einer Optik 3 projiziert. Das Videobild setzt sich aus Bildpunkten zusammen, deren Intensität (bei Farbvideobildern auch die Farbe) durch eine intensitätsmäßig (bzw. farbwertmäßig) steuerbare Lichtquelle 4 erzeugt wird, die in Fig. 1 nur vereinfacht als kompakte Einheit dargestellt ist, aber allgemein auch Laser, LED's und Modulatoren zur Steuerung der Intensität bzw. der Farbe enthalten kann.

Mit der Lichtquelle 4 wird ein Lichtbündel 5 erzeugt, das durch eine Ablenkeinrichtung 6 bild- und zeilenmäßig gerastert wird. Zur zeilenmäßigen Rasterung ist in der Ablenkeinrichtung 6 ein um eine Rotationsachse 7 rotierender Polygonspiegel 8 vorgesehen, der eine zeilenmäßige Ablenkung des Lichtbündels 5 bewirkt. Das abgelenkte Lichtbündel fällt sodann auf einen um eine Schwenkachse 9 verdrehbaren Schwenkspiegel 10, mit dem eine Ablenkung senkrecht zur zeilenmäßigen Ablenkung erfolgt. In Fig. 1 ist auf der Fresnellinse 2 ein Koordinatensystem mit x und y eingezeichnet, in dem die Koordinatenrichtung x die zeilenmäßige Ablenkung und die Koordinatenrichtung y die hierzu senkrechte bildmäßige Ablenkung bezeichnen.

Der Polygonspiegel 8 ist an seinem Umfang an jeder Polygonseite mit einer Facette 11 versehen, die aus einem ebenen Spiegel besteht. Der Polygonspiegel 8 weist im Ausführungsbeispiel nach Fig. 1 zweiunddreißig Facetten 11 auf und rotiert bei der Fernsehnorm HDTV mit einer Umdrehungszahl von ungefähr 1000 U/sek bzw. bei der Standardfernsehnorm (PAL/SECAM) mit etwa 500 U/sek. Damit rastert eine das Lichtbündel 5 ablenkende Facette 12 dieses mit der durch die jeweilige Norm bestimmten Zeilenfrequenz. Durch die wechselnde Neigung jeder Facette 12 relativ zum Lichtbündel 5 innerhalb einer Zeilenperiode wird dieses in x-Richtung zur Erzeugung einer Bildseite abgelenkt.

Der Polygonspiegel 8 weist jedoch üblicherweise aufgrund des Fertigungsprozesses gewisse Fehler auf, unter denen als in der Ablenkeinrichtung 6 besonders störender optischer Fehler der sogenannte Pyramidalfehler zu nennen ist, der in einer Abweichung von der exakten Parallelität zwischen der Ebene einer beliebigen Facette 11 des Polygonspiegels 8 und dessen Drehachse besteht. Dieser Fehler ändert sich im allgemeinen von Facette zu Facette. Bei einer Videoprojektion bewirkt er vor allem ungleichmäßige Abstände von Zeile zu Zeile im Videobild und macht sich einem Betrachter in Form einer deutlichen Streifenstruktur bemerkbar.

Diese Streifenstruktur erstreckt sich bei der Anordnung nach Fig. 1 in y-Richtung und wird dadurch kompensiert, daß der die y-Ablenkung bewirkende Schwenkspiegel 10 zusätzlich zu den Signalen, welche die bildmäßige Ablenkung steuern, noch mit einer Steuergröße beaufschlagt wird, die dem Pyramidalfehler entgegenwirkt.

Diese Steuergröße wird mit Hilfe einer Meßeinrichtung 13 gewonnen, mit der die Fehlneigung einer an einer bestimmten Meßstelle 15 zu vermessenden Facette 16 bestimmt wird. Aus dem Meßwert wird die Steuergröße gewonnen, über die mit Hilfe einer Elektronik die Korrekturablenkung des Schwenkspiegels 10 zur Kompensation des Pyramidalfehlers zusätzlich zur bildmäßigen Rasterung gesteuert wird.

Der zur Korrekturablenkung erforderliche, zusätzliche Ablenkwinkel für den Schwenkspiegel 10 wird doppelt so groß wie der gemessene Winkel der Fehlneigung eingestellt, da sich die Fehlneigung doppelt auf das Lichtbündel 5 auswirkt, nämlich im Einfalls- und im Ausfallswinkel.

Wäre die vermessene Facette 16 identisch mit der ablenkenden Facette 12, ließe sich die gewonnene Steuergröße direkt zur Ansteuerung des Schwenkspiegels 10 benutzen. Es ist jedoch vorteilhaft, die Lage der zu vermessenden Facette 16 verschieden von der der ablenkenden Facette 12 zu wählen, beispielsweise damit Streulicht aus der Lichtquelle 4 oder durch Staub im Wege des Lichtbündels 5 die Meßeinrichtung 13 möglichst wenig beeinflußt. Zur Synchronisation von Messung und Korrekturablenkung ist eine Verzögerung in der Abgabe der aus der Messung mit Hilfe der Meßvorrichtung 13 gewonnenen Steuergröße zur Kompensation des Pyramidalfehlers am Schwenkspiegel 10 vorgesehen. In Fig. 1 liegen die Position der vermessenen Facette 16 und die der ablenkenden Facette 12 um einen Winkel α zueinander versetzt. Es hat sich gezeigt, daß Streulicht bei gleichzeitig geringem elektronischen Aufwand zur Signalverzögerung besonders dann optimal unterdrückt werden kann, wenn der Winkel α bei 90° ± 45° liegt.

Die Messung der Facettenneigung und die Korrekturablenkung durch den Schwenkspiegel 10 während des Betriebs des Videoprojektionsgerätes gestatten nicht nur den Ausgleich der z.B. bei der Herstellung durch das Schleifen bedingten unterschiedlichen Facettenneigungen, sondern kann auch Verlagerungen der Rotationsachse 7, beispielsweise durch Verschleiß, thermische Änderungen im Projektionssystem oder auch durch auf das Videoprojektionssystem wirkende Schläge oder Schwingungen, die von anderen Geräten übertragen werden, kompensieren.

Die Meßeinrichtung 13 umfaßt als wesentliche Elemente zur Bestimmung der Neigung der Facette 16 einen Laser 17 und einen lichtempfindlichen Positionsdetektor 18. Der Laser 17 kann ein Halbleiterlaser oder ein kleiner Helium-Neonlaser sein, da keine große Leistung zur Vermessung der Facettenneigung nötig ist.

Der Laser 17 sendet ein Meßlichtbündel 19 aus, das an der an der Meßstelle 15 befindlichen Facette 16, also bei einem bestimmten Rotationswinkel der Facette 16, so reflektiert wird, daß das reflektierte Meßlichtbündel 20 auf den lichtempfindlichen Positionsdetektor 18 fällt. Die Geometrie ist so gewählt, daß der Winkel β zwischen der Ausrichtung des Meßlichtbündels 19 und der des reflektierten Meßlichtbündels 90° ± 10° beträgt, was Meßfehler aufgrund von Streulicht aus dem Meßlichtbündel 19 weitgehend verringert.

Lichtempfindliche Positionsdetektoren sind im Handel verfügbar und können z.B. von UDT Instruments, 12151 Research Park, Orlando, Florida 2826 bezogen werden. Sie beruhen auf dem Prinzip eines unterschiedlichen Vorwiderstands für eine durch einen Lichtstrahl erzeugte Photospannung in Abhängigkeit von dem vom Lichtstrahl getroffenen Ort. Zwei Spannungen U₁, U₂ sind über Anschlüsse 21, 22 gegenüber einem als Bezugspunkt dienenden Nullpunkt 23 abgreifbar. Die Spannungsdifferenz U₁ - U₂ ist proportional dem Abstand des Auftrefforts eines Lichtbündels 20 zum Nullpunkt 23.

In Fig. 1 sind schematisch drei reflektierte Meßlichtbündel 20 eingezeichnet, von denen das mittlere auf den Nullpunkt 23 des lichtempfindlichen Positionsdetektors 18 fällt und die äußeren um einen Winkelbereich ϕ von diesem abweichen. Die auftretende Abweichung innerhalb des Winkelbereichs ϕ ist doppelt so groß wie die vorhandene (zu bestimmende) Facettenneigung des Polygonspiegels 8.

Bei der in Fig. 1 dargestellten geometrischen Anordnung ist der Winkel ϕ sehr klein und die Spannungsdifferenz zwischen den Spannungen U₁ und U₂ kann direkt als Steuergröße verwendet werden, um mit Hilfe des Schwenkspiegels 10 die Fehlabweichung aufgrund des Pyramidalfehlers des Polygonspiegels 8 zu kompensieren. Bei anderen Anordnungen, vor allem, wenn der Winkelbereich ϕ sehr groß ist, können sich kompliziertere Funktionen zur Umwandlung der Spannungsdifferenz U₁ - U₂ in eine Steuergröße ergeben, so daß die Spannungsdifferenz U₁ - U₂ erst entsprechend transformiert werden muß, um sie als Steuergröße für den Schwenkspiegel 10 einsetzen zu können.

Wie aus Fig. 1 ersichtlich ist, liegt der lichtempfindliche Positionsdetektor 18 symmetrisch zu einem reflektierten Meßlichtbündel 20, das von einer Facette 16 bei Fehlneigung Null reflektiert würde, mit der Folge, daß der Absolutwert der Spannungsdifferenz U₁ - U₂ unabhängig davon, ob der Fehlneigungswinkel positiv oder negativ ist, bei gleicher absoluter Neigung der Facette 16 denselben Wert hat. Dadurch wird der Aufwand zur Ermittlung der Steuergröße zur Ansteuerung des Schwenkspiegels 10 gering, da eine Schaltung zum Polygonfehlerausgleich vorzeichenunabhängig arbeiten kann.

Das Meßlichtbündel 20 trifft während der Rotation des Polygonspiegels 8 nur zeitweilig auf den lichtempfindlichen Projektionsdetektor 18 auf. Das bedeutet, daß die der Fehlneigung proportionale Spannungsdifferenz U₁-U₂ bei einer bestimmten Zeit gespeichert werden muß, damit der Schwenkwinkel des Schwenkspiegels 10 für die gesamte Zeit eines Videobildes konstant gehalten wird. Der zur Speicherung nötige Übernahmeimpuls kann über die Summe der Spannungen U₁ und U₂ des Positionsdetektors 18 gewonnen werden, denn die Summenspannung U₁ + U₂ ist im wesentlichen unabhängig von dem Ort, an dem das reflektierte Meßlichtbündel 20 auf den Positionsdetektor 18 auftrifft. Sie zeigt jedoch an, daß sich der Polygonspiegel 8 in geeigneter Position befindet, um einen Meßwert infolge der Spannungsdifferenz U₁ - U₂ aufzunehmen.

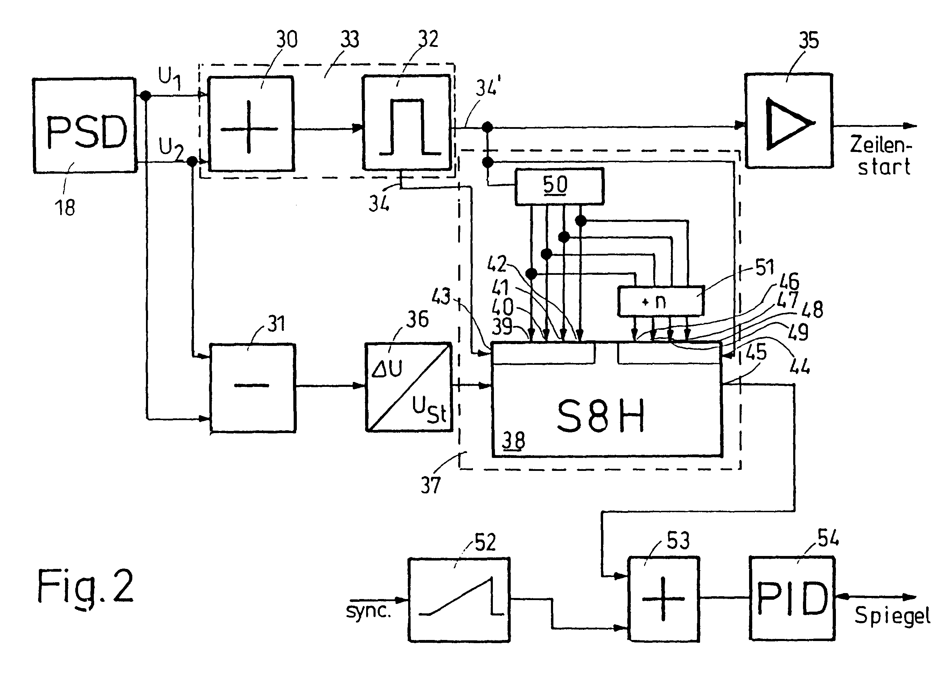

Fig. 2 zeigt eine Schaltung zum Ausführungsbeispiel von Fig. 1. Auf der linken Seite ist der lichtempfindliche Projektionsdetektor 18 dargestellt, der mit PSD gekennzeichnet ist (position sensitive detector). Die beiden Spannungen U₁ und U₂ werden durch einen analogen Addierer 30 addiert bzw. durch einen analogen Subtrahierer 31 voneinander subtrahiert, wodurch an den jeweiligen Ausgängen Signale erzeugt werden, von denen das Summensignal zur Synchronisation mit der Rotation des Polygonspiegels 8 geeignet und das andere von der Facettenneigung abhängig ist. Das am Ausgang des Addierers 30 gewonnene Signal wird im Beispiel von Fig. 2 durch einen Pulsformer 32 in einen Rechteckimpuls definierter Breite umgeformt, um eine möglichst gute Synchronisierung zu erreichen. Zur Verbesserung der Signalflanken kann der Pulsformer 32 einen Schmitt-Trigger oder einen Komparator enthalten, wobei ein Komparator es vor allen Dingen auch gestattet, die Ansprechschwelle zu verändern, so daß man Toleranzen im Aufbau der Vorrichtung ausgleichen kann.

Der Addierer 30 und die Pulsformschaltung 32 bilden gemeinsam eine Takterzeugungsschaltung 33, deren Ausgänge 34 und 34' Impulse definierter Form und definierter Zeitdauer abgeben, die zur weiteren Synchronisierung innerhalb des Videoprojektionssystems nach Fig. 1 verwendet werden. Am Ausgang 34 wird ein Signal mit einer Flanke erzeugt, die zeitgleich zum Maximalsignal der Spannungsdifferenz U₁ - U₂ liegt, so daß die Flanke zur Speicherung der Spannungsdifferenz U₁ - U₂ geeignet ist. Das am Ausgang 34' erzeugte Signal ist demgegenüber so verzögert, daß seine Flanke synchron mit dem Zeilenstart liegt. Diese Verzögerungszeit ergibt sich aus der Lage der Meßstelle 15. Es ist günstig, die Verzögerungszeit zwischen den Signalen am Ausgang 34' und 34 variabel zu halten, damit mechanische Toleranzen beim Aufbau eines Videoprojektionssystems ausgeglichen werden können.

Zur Verstärkung und zur Anpassung an das übrige System ist der Ausgang 34' der Takterzeugungsschaltung 33 an einen Treiber 35 angeschlossen, dessen Ausgang als Zeilenstartimpuls im Gesamtsystem weiter benutzt wird.

Am Ausgang des Substrahierers 31 liegt, wie schon dargestellt, eine Spannung an, die eine Funktion des Fehlneigungswinkels der Facette 16 ist. Bei kleinen Ablenkungen ϕ, wie in Fig. 1, ist die Spannung direkt proportional zum Fehlneigungswinkel der Facette 16 und kann durch eine einfache Verstärkung als Steuergröße zur Ablenkung des Schwenkspiegels 10 eingesetzt werden. Bei anderen geometrischen Anordnungen kann jedoch eine aufwendigere Steuereinrichtung 36 erforderlich werden, um das Ausgangssignal des Subtrahierers 31 in eine geeignete Steuergröße U_{ST} umzuwandeln, mit der der Schwenkspiegel 10 beaufschlagt werden kann.

Wie anhand von Fig. 1 schon erläutert wurde, bedarf es einer Speicherung der Steuergröße und einer Zeitverzögerung, wenn die ablenkende Facette 12 nicht identisch mit der vermessenen Facette 16 ist. Dazu ist eine Verzögerungsschaltung 37 vorgesehen. Die Verzögerungszeit muß gleich der Zeit sein, die eine Facette 11 bei der Rotation benötigt, um vom Meßort 15 an die Position bewegt zu werden, an der die Ablenkung des Lichtbündels 5 erfolgt. Für analoge Verzögerungsleitungen lassen sich beispielsweise Ultraschallverzögerungsleitungen einsetzen, wie sie auch zur Zeilenverzögerung in PAL- und SECAM-Technik verwendet werden.

Fig. 2 zeigt innerhalb der Verzögerungsschaltung 37 einen Aufbau, der sowohl digitale wie auch analoge Techniken verwendet. Ein wesentliches Element ist hier eine Sample and Hold-Schaltung 38, mit der analoge Spannungen, beispielsweise durch Ladung von Kondensatoren, gespeichert werden können. In Fig. 2 wird ein Kondensator zum Speichern des eingangsseitig anliegenden Steuerwerts mit Hilfe eines an Eingängen 39, 40, 41, 42 anliegenden Digitalwertes ausgewählt. Zur Ausgabe der gespeicherten Werte an einem Ausgang 45 der Sample and Hold-Schaltung 38 ist eine Adressierung jedes Kondensators durch einen Digitalwert an den Leitungen 46, 47, 48, 49 vorgesehen.

Die eingangsseitig an der Sample and Hold-Schaltung 38 anliegende Steuergröße wird in den über die Eingänge 39, 40, 41, 42 adressierten Kondensator übernommen, wenn dort ein Eingangsübergabesignal an einem Eingang 43 anliegt. Ähnlich wird die Spannung an einem über die Eingänge 46, 47, 48, 49 adressierten Kondensator am Ausgang 45 ausgegeben, wenn an einem Eingang 44 ein Ausgangsübernahmesignal angelegt wird. Die Adressierung über die Eingänge 39, 40, 41, 42 erfolgt über einen Zähler 50, der von den Taktimpulsen am Ausgang 34' hochgezählt wird. Auf den jeweiligen Digitalwert am Ausgang des Zählers 50 wird mit Hilfe eines digitalen Addierers 51 eine feste Zahl n entsprechend der Anzahl der Facetten zwischen der Meßstelle 15 und der Facette 12, die das Lichtbündel ablenkt, zum Zählerstand addiert und eine digitale Ausgangsgröße erzeugt, mit der die Kondensatoren zur Übergabe der gespeicherten Spannung an den Ausgang 45 adressiert werden. Eingangsübergabesignal und Ausgangsübernahmesignal werden, wie vorher beschrieben, von der Takterzeugungsschaltung 33 ausgegeben.

Aufgrund der gegeneinander verzögerten Flanken der Signale am Ausgang 34' und 34 der Pulsformschaltung 31 und dem Aufaddieren einer Konstante n durch den digitalen Addierer 51 auf den Zählerinhalt des Zählers 50 ist das Ausgangssignal am Ausgang 45 der Sample- und -Hold-Schaltung 38 für die Rotationszeit für n Facetten synchronisiert.

Ohne Korrektur für den Pyramidalfehler würde der Schwenkspiegel 10 in einem Videoprojektionssystem direkt von einem Funktionsgenerator angesteuert, der einen Sägezahn zu bildmäßiger Rasterung erzeugt. Ein solcher Funktionsgenerator 52 ist auch in Fig. 2 zur gleichmäßigen bildmäßigen Rasterung vorgesehen. Seine Ausgangsspannung wird mit der verzögerten Steuergröße am Ausgang 45 über eine Addierschaltung 53 zu einer Summenspannung analog addiert, mit deren Hilfe der Schwenkspiegel 10 angesteuert wird. Zur Ansteuerung dient eine Treiberschaltung 54, die im vorliegenden Ausführungsfall eine Regelung des Schwenkwinkels vorsieht, wobei die Eingangsspannung den Sollwert für die Regelung darstellt. Die Regelung ist nicht nur eine einfache Proportionalregelung, sondern eine Kombination von P-, I-, und D-Charakteristiken. Die I- und D-Glieder sind vor allem dafür geeignet, die Trägheit des Schwenkspiegels 10 bei einer Winkeländerung teilweise auszugleichen, indem bei einer großen SOLUIST-Abweichung eine größere Beschleunigung vorgegeben wird, die gedämpft wird, wenn der Istwert in die Nähe des Sollwertes nachgeregelt ist. Die Zeitkonstanten der 1- und D-Glieder sind entsprechend der Trägheit des Schwenkspiegels 10 ausgelegt.

Die Regelung und der damit verbundene Ausgleich des Pyramidalfehlers ist dann besonders wirkungsvoll, wenn die Treiberschaltung 54 zusammen mit der mechanischen Trägheit des Schwenkspiegels 10 erst bei möglichst hochfrequenten Oberwellenanteilen im Sollwert begrenzt ist. Deswegen ist die Grenzfrequenz der Treiberschaltung 54 und des Schwenkspiegels 10 im Beispiel der Fig. 1 und 2 größer als 60 kHz, so daß noch die zweite Oberwelle bei der HDTV Norm berücksichtigt wird. Weiter hat der Schwenkspiegel 10 zusammen mit der Regelung in der Treiberschaltung 54 eine Resonanzfrequenz nahe bei 60 kHz, was zu einer Anhebung der zweiten Oberwelle führt, so daß eine Dämpfung aufgrund der mechanischen Trägheit größtenteils kompensiert ist.

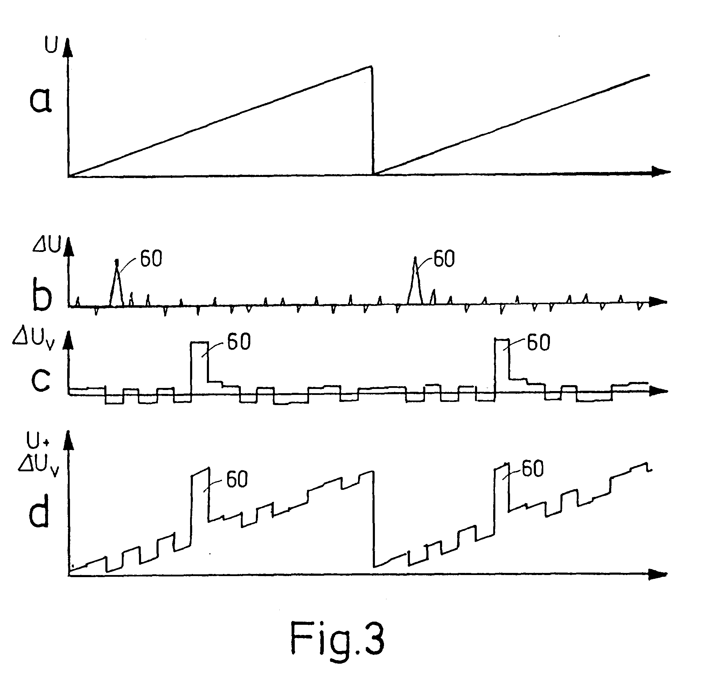

In Fig. 3 sind verschiedene Signalverläufe dargestellt, welche die Wirkungsweise der Elektronik aus Fig. 2 detaillierter zeigen. Fig. 3a gibt einen Sägezahn mit einem Spannungsverlauf U über der Zeit wieder, wie er von dem Funktionsgenerator 52 zur bildmäßigen Rasterung bei der Videoprojektion erzeugt wird. In Fig. 3b ist das Zeitverhalten der durch die Steuereinrichtung 36 gewonnenen Steuergröße, der Spannungsdifferenz Δ U, dargestellt. Der Signalverlauf schwankt um den Nullpunkt und die Höhe der einzelnen Signale entspricht der unterschiedlichen Facettenneigung. Dabei treten auch zwei Spitzen 60 auf, die eine besonders große Facettenneigung einer einzelnen Facette beispielhaft darstellen sollen.

Fig. 3c zeigt beispielhaft für n = 5 des digitalen Addierers 51 den Signalverlauf Δ U_{V} am Ausgang 45 der Sample- and -Hold-Schaltung 38. Man erkennt, daß die Signalspitzen 60 im Vergleich zu denen aus Fig. 3b verzögert sind. Aus Fig. 3c wird auch deutlich, daß durch die Verzögerungsschaltung 37 eine Pulsformung stattfindet, die vor allem darauf zurückzuführen ist, daß die Werte analog in der Sample- and -Hold-Schaltung 38 zwischengespeichert sind und zur Ausgabe digital adressiert werden. Durch die Speicherung wird die Ablenkung des Schwenkspiegels 10 zur Kompensation des Pyramidalfehlers während der Zeitdauer einer Zeile konstant gehalten und die Zeilen des Videobildes auf dem Schirm 1 verlaufen gerade.

In Fig. 3d ist der Signalverlauf von U+U_{V} am Ausgang der Addierschaltung 51 gezeigt. Es ist deutlich zu sehen, daß der Signalverlauf in Fig. 3d die Summe aus den Signalverläufen der Fig. 3a und 3c ist. Dieses Signal enthält die Spannungen sowohl für die bildmäßige Rasterung eines Videobildes wie auch für den Pyramidalfehlerausgleich.

Bei der Auswahl des Lasers 17 und seiner Justierung ist vor allen Dingen darauf zu achten, daß der Laser denselben Flächenbereich einer Facette 16 erfaßt, der auch für die Ablenkung des Lichtbündels 5 eingesetzt wird. Im Beispiel aus Fig. 1 hat das vom Laser 17 ausgehende Meßlichtbündel 19 den gleichen Durchmesser von 2 mm wie das Lichtbündel 5. Der Polygonspiegel 8 weist eine Dicke von 4 mm auf. Aufgrund dieser Abmessungen ist sichergestellt, daß der Laser 17 am Meßort 15 einen ähnlichen Flächenbereich der Facette 16 erfaßt, wie er später auch zur Ablenkung des Lichtbündels 5 ausgenutzt wird.

Bei anderen als den dargestellten geometrischen Abmessungen sollte jedoch darauf geachtet werden, daß das Meßlichtbündel 19 des Lasers 17 ungefähr den gleichen Durchmesser wie das Lichtbündel 5 hat, insbesondere sollte das Verhältnis der beiden Durchmesser nicht wesentlich außerhalb des Bereichs von 0,5 bis 1,5 liegen.

Dadurch, daß der Polygonspiegel 8 im Beispiel von Fig. 1 relativ schmal ist, ist auch sichergestellt, daß das Meßlichtbündel 19 und das Lichtbündel 5 in ungefähr denselben Flächenbereichen auf einer Facette 11 auftreffen. Bei breiteren Polygonspiegeln müßte man dafür gesondert justieren. Zudem ist es vorteilhaft, wenn die Mitte des Meßlichtbündels 19 auf einem Flächenbereich der Facette 16 auftrifft, der auch zur Ablenkung des Lichtbündels 5 für die zeilenmäßige Rasterung benutzt wird.

## Patentansprüche

1. Videoprojektionssystem mit einer intensitätsmäßig steuerbaren Lichtquelle (4) zur Aussendung eines Lichtbündels (5) und einer Ablenkeinrichtung (6) mit der das Lichtbündel (5) zeilen- und bildmäßig gerastert wird, und mit einem Polygonspiegel (8) mit dem eine zeilenmäßige Ablenkung des Lichtbündels (5) über Facettenflächen des Polygonspiegels (8) bewirkt wird, mit einer Meßeinrichtung (13), mit der laufend die Ausrichtung jeder Facettenfläche beim Vorbeilauf an einer Meßstelle überprüfbar, bei Auftreten einer Fehlneigung deren Winkel bestimmbar und abhängig von diesem ein Eingangssignal an die Steuereinrichtung (36) abgebbar ist, von dem die Korrekturablenkung in doppelter Größe des Winkels der festgestellten Fehlneigung ableitbar ist, mit einer Steuereinrichtung (36), mittels derer die Ablenkeinrichtung zur Ausführung der Korrekturablenkung ansteuerbar ist, und mit einem Funktionsgenerator (52), der eine elektrische Ausgangsgröße für einen vorgegebenen Winkel zur bildmäßigen Ablenkung des Lichtbündels (5) erzeugt, gekennzeichnet durch eine Addierschaltung (53) zur Bildung einer Summengröße, in der eine Steuergröße für die Einstellung der Korrekturablenkung zur elektrischen Ausgangsgröße des Funktionsgenerators (52) addierbar ist, wonach die Ablenkeinrichtung (9, 10) in bildmäßiger Ablenkrichtung mit der Summengröße beaufschlagbar ist, wodurch die Ablenkeinrichtung (9, 10) eine Korrekturablenkung des Lichtbündels (5) bei Fehlneigung einer Facettenfläche um einen Korrekturwinkel in einer der Fehlneigung entgegengesetzten Richtung ausführt.

2. Videoprojektionssystem nach Anspruch 1, dadurch gekennzeichnet, daß die Ablenkeinrichtung (9, 10) einen Schwenkspiegel (10) mit elektrisch einstellbarem Schwenkwinkel und eine Treiberschaltung (54) zu dessen Steuerung enthält.

3. Videoprojektionssystem nach Anspruch 2, dadurch gekennzeichnet, daß die Treiberschaltung (54) einen PID-Regler aufweist, der den Schwenkwinkel in Abhängigkeit von einer Eingangsgröße als Sollwert regelt, wobei die Zeitkonstanten der 1- und D-Regelung an die mechanische Trägheit des Schwenkspiegels (10) angepaßt sind.

4. Videoprojektionssystem nach Anspruch 2 oder 3, dadurch gekennzeichnet, daß der Schwenkspiegel (10) und eine diesen ansteuemde Elektronik (53, 54) eine Grenzfrequenz aufweisen, die mindestens doppelt so groß wie die Zeilenfrequenz ist.

5. Videoprojektionssystem nach einem der Ansprüche 1 bis 4, dadurch gekennzeichnet, daß die Meßeinrichtung (13) einen ein Meßlichtbündel (19) aussendenden Laser (17) enthält, der so angeordnet ist, daß das Meßlichtbündel (19) an der Meßstelle von jeder vorbeilaufenden Facette (16) reflektiert wird.

6. Videoprojektionssystem nach Anspruch 5, dadurch gekennzeichnet, daß ein lichtempfindlicher Positionsdetektor (18) so angeordnet ist, daß er das an einer vorbeilaufenden Facette (16) reflektierte Meßlichtbündel (20) zumindest zeitweise empfängt und dann zwei Spannungen (U₁, U₂) erzeugt, deren Differenz eine Funktion der Facettenneigung ist.

7. Videoprojektionssystem nach Anspruch 5 oder 6, dadurch gekennzeichnet, daß der Laser so ausgerichtet ist, daß das Meßlichtbündel (19) in einer Ebene senkrecht zur Rotationsachse (7) des Polygonspiegels (8) unter einem von Null verschiedenen Winkel zum Radius des Polygonspiegels (8) im Auftreffpunkt (15) des Meßlichtbündels (19) auf der Facettenfläche verläuft.

8. Videoprojektionssystem nach Anspruch 6 oder 7, dadurch gekennzeichnet, daß der lichtempfindliche Positionsdetektor (18) relativ zum Polygonspiegel (8) und zum Laser (17) so angeordnet ist, daß ein die Differenzspannung Null am Positionsdetektor erzeugendes, an einer Facette (16) reflektiertes Meßlichtbündel (20) mit dem vom Laser (17) ausgehenden Meßlichtbündel (19) einen Winkel (β) von 90° ± 10° einschließt.

9. Videoprojektionssystem nach einem der Ansprüche 5 bis 8, dadurch gekennzeichnet, daß der Durchmesser des vom Laser (17) erzeugten Meßlichtbündels (19) zwischen dem 1,5-fachen und dem 0,5-fachen des Fokus auf der ablenkenden Facette (12) des auf dem Polygonspiegel abgelenkten Lichtbündels (5) ist.

10. Videoprojektionssystem nach einem der Ansprüche 5 bis 9, dadurch gekennzeichnet, daß der Laser (17) so ausgerichtet ist, daß das Zentrum des von ihm ausgehenden Meßlichtbündels an einem Punkt auf der Facette (16) auftrifft, der innerhalb eines Flächenbereiches der Facette (16) liegt, innerhalb dessen auch das abzulenkende Lichtbündel (5) reflektiert wird.

11. Videoprojektionssystem nach einem der Ansprüche 5 bis 10, dadurch gekennzeichnet, daß der Laser (17) so angeordnet ist, daß die den jeweiligen Meßort (15) enthaltende Facette (16) in einem Winkel von 90° ± 45° in Rotationsrichtung vor der das Lichtbündel (5) ablenkenden Facette (12) liegt und daß in der Steuereinrichtung (31, 36, 37, 53, 54) eine Verzögerungsschaltung (37) vorgesehen ist, welche die Abgabe der Steuergröße um eine Zeit verzögert, die im wesentlichen gleich der Zeit ist, die eine Facette (11, 12, 16) benötigt, um infolge der Rotation des Polygonspiegels (8) von der Meßstelle (15) zum Auftreffort des abzulenkenden Lichtbündels (5) zu gelangen.

12. Videoprojektionssystem nach Anspruch 11, dadurch gekennzeichnet, daß die Verzögerungsschaltung (32) eine Verzögerungsleitung mit fester Verzögerungszeit aufweist.

13. Videoprojektionssystem nach Anspruch 11, dadurch gekennzeichnet, daß die Verzögerungsschaltung (37) eine digitale Schaltung (50, 51, 38) umfaßt.

14. Videoprojektionssystem nach Anspruch 13, gekennzeichnet durch eine Sample- and - Hold-Schaltung (38), bei der die zeitlich aufeinanderfolgend abzugebenden Steuergrößen jeweils in einer von mehreren Speicherstellen abgespeichert werden, wenn ein Eingangsübergabesignal (43) anliegt, und aus der Speicherstelle die jeweils zur optischen Korrektur des Neigungswinkels benötigte Steuergröße ausgegeben wird, wenn ein Ausgangsübemahmesignal (45) anliegt, wobei dieses gegenüber dem Eingangsübergabesignal mit Hilfe einer digitalen Schaltung (50, 51) verzögert ist.

15. Videoprojektionssystem nach Anspruch 13 oder 14, dadurch gekennzeichnet, daß die Videoprojektionssystem eine Takterzeugungsschaltung (33) enthält, welche die Taktimpulse zur digitalen Verzögerung (37) aus der Summenspannung der beiden Spannungen eines lichtempfindlichen Positionsdetektors (18) erzeugt, bei dem die Differenz der beiden Spannungen eine Funktion der Facettenneigung ist.

16. Videoprojektionssystem nach Anspruch 15, dadurch gekennzeichnet, daß die Takterzeugungsschaltung (33) auch eine Pulsformschaltung (32), insbesondere unter Verwendung eines Komparators oder eines Schmitt-Triggers, aufweist.

## Claims

1. A video projection system comprising a controllable-intensity light source (4) for transmitting a light beam (5), a deflecting device (6) for scanning the light beam (5) linewise and framewise, a polygonal mirror (8) for deflecting the light beam (5) line-by-line via facette surfaces of the polygonal mirror (8), a measuring device (13) by means of which the alignment of each facette surface on passing a measuring point can be continuously checked, if the inclination is faulty the angle thereof can be determined and, in dependence thereon, an input signal can be transmitted to the control device (36) whereby the corrective deflection, equal to twice the angle of the measured faulty inclination, can be derived; and also comprising a control device (36) for actuating the deflecting device for making the corrective deflection, and also comprising a function generator (52) which generates an electric output quantity for a preset angle for frame-wise deflection of the light beam (5), characterised by an adding circuit (53) for forming a total quantity in which a control quantity for adjusting the corrective deflection can be added to the electric output quantity of the function generator (52), after which the deflecting device (9, 10) can be supplied with the total quantity in the direction of frame-wise deflection, as a result of which, if a facette surface is at the wrong inclination, the deflecting device (9, 10) corrects the deflection of the light beam (5) by deflecting it through a corrective angle in the opposite direction to the faulty inclination.

2. A video projection system according to claim 1, characterised in that the deflecting device (9, 10) contains a pivoting mirror (10) pivoted through an electrically adjustable angle, and a driver circuit (54) for actuating it.

3. A video projection system according to claim 2, characterised in that the driver circuit (54) comprises a PID controller which controls the pivoting angle in dependence on an input quantity as the set-value, the time constants for I and D control being adapted to the mechanical inertia of the pivoting mirror (10).

4. A video projection system according to claim 2 or 3, characterised in that the pivoting mirror (10) and an electronic unit (53, 54) for actuating it have a limiting frequency at least twice the line frequency.

5. A video projection system according to any of claims 1 to 4, characterised in that the measuring device (13) contains a laser (17) which transmits a measuring light beam (19) and is so disposed that the measuring light beam (19) is reflected at the measuring point by each passing facette (16).

6. A video projection system according to claim 5, characterised in that a photosensitive position detector (18) is so disposed that it at least intermittently receives a measuring light beam (20) reflected from a passing facette (16) and then generates two voltages (U₁, U₂), the difference between them being a function of the inclination of the facette.

7. A video projection system according to claim 5 or 6, characterised in that the laser is so aligned that the measuring light beam (19) travels in a plane at right angles to the axis of rotation (7) of the polygonal mirror (8) at a non-zero angle to the radius of the polygonal mirror (8) at the point (15) where the measuring light beam (19) strikes the facette surface.

8. A video projection system according to claim 6 or 7, characterised in that the photosensitive position detector (18) is so disposed relative to the polygonal mirror (8) and to the laser (17) that a measuring light beam (20) reflected at a facette (16) and generating a zero differential voltage at the position detector is at angle (β) of 90° ± 10° to the measuring light beam (19) from the laser (17).

9. A video projection system according to any of claims 5 to 8, characterised in that the diameter of the measuring light beam (19) generated by the laser (17) is between 1.5 and 0.5 times the focus on the deflecting facette (12) of the light beam (5) deflected by the polygonal mirror.

10. A video projection system according to any of claims 5 to 9, characterised in that the laser (17) is so aligned that the centre of the measuring light beam leaving it strikes the facette (16) at a point within an area of the facette (16) inside which the deflected light beam (5) is also reflected.

11. A video projection system according to any of claims 5 to 10, characterised in that the laser (17) is so disposed that the facette (16) containing the respective measuring point (15) is at angle of 90° ± 45° in the direction of rotation in front of the facette (12) deflecting the light beam (5), and in that a delay circuit (37) is provided in the control device (31, 36, 37, 53, 54) and delays delivery of the control quantity by a time which is substantially equal to the time needed by a facette (11, 12, 16) to move, as a result of rotation of the polygonal mirror (8), from the measuring point (15) to the place where the deflected light beam (5) strikes.

12. A video projection system according to claim 11, characterised in that the delay circuit (32) is a delay line with a fixed delay time.

13. A video projection system according to claim 11, characterised in that the delay circuit (37) comprises a digital circuit (50, 51, 38).

14. A video projection system according to claim 13, characterised by a sample and hold circuit (38) wherein the successively delivered control quantities are each stored in one of a number of storage points when an input transfer signal (43) is received, and the control variable required for optical correction of each angle of inclination is output from the storage point when an output transfer signal (45) is received, the latter signal being delayed by a digital circuit (50, 51) relative to the input transfer signal.

15. A video projection system according to claim 13 or 14, characterised in that the video projection system contains a clock generating circuit (33) which generates the clock pulses for digital delay (37) from the total of the two voltages of a photosensitive position detector (18), the difference between the two voltages being a function of the inclination of the facette.

16. A video projection system according to claim 15, characterised in that the clock generating circuit (33) also contains a pulse-shaping circuit (32), more particularly using a comparator or a Schmitt trigger.

## Revendications

1. Système de projection vidéo comportant une source lumineuse (4) commandable en intensité pour l'émission d'un faisceau lumineux (5) ainsi qu'un dispositif de déviation (6) avec lequel le faisceau lumineux (5) est tramé suivant les lignes et suivant l'image, et comportant un miroir polygonal (8) avec lequel une déviation suivant les lignes du faisceau lumineux (5) est opérée sur des facettes du miroir polygonal (8), comportant un dispositif de mesure (13) avec lequel l'orientation de chaque facette est vérifiable en continu lors du passage devant un point de mesure, son angle peut être déterminé et en fonction de celui-ci il peut être délivré au dispositif de commande (36) un signal d'entrée, à partir duquel peut être dérivée la déviation de correction en grandeur double de l'angle de l'inclinaison erronée constatée, comportant un dispositif de commande (36), au moyen duquel peut être commandé le dispositif de déviation en vue de la réalisation de la déviation de correction et comportant un générateur de fonction (52), qui produit une grandeur de sortie électrique pour un angle donné en vue de la déviation suivant l'image du faisceau lumineux (5), caractérisé par un circuit d'addition (53) pour la formation d'une somme, dans lequel une grandeur de commande peut être additionnée à la grandeur de sortie électrique du générateur de fonction (52), pour le réglage de la déviation de correction, après quoi la somme peut être envoyée au dispositif de déviation (9, 10), dans une direction de déviation suivant l'image, ce qui fait qu'en cas d'inclinaison erronée d'un facette, le dispositif de déviation (98, 10) exécute une déviation de correction du faisceau lumineux (5), d'un angle de correction, dans un sens opposé à l'inclinaison incorrecte.

2. Système de projection vidéo selon la revendication 1, caractérisé en ce que le dispositif de déviation (9, 10) contient un miroir pivotant (10) avec angle de pivotement électriquement réglable et un circuit d'excitation (54) pour sa commande.

3. Système de projection vidéo selon la revendication 2, caractérisé en ce que le circuit d'excitation (54) comporte un régulateur PID, qui règle l'angle de pivotement en fonction d'une grandeur d'entrée servant de valeur de consigne, les constantes de temps de la régulation I et D étant adaptées à l'inertie mécanique du miroir pivotant (10).

4. Système de projection vidéo selon la revendication 2 ou 3, caractérisé en ce que le miroir pivotant (10) et une électronique (53, 54) commandant celui-ci présentent une fréquence limite qui est au moins le double de la fréquence de temps.

5. Système de projection vidéo selon l'une des revendications 1 à 4, caractérisé en ce que le dispositif de mesure (13) contient un laser (17), émettant un faisceau lumineux de mesure (19), qui est disposé de manière que le faisceau lumineux de mesure (19) soit réfléchi au point de mesure par chaque facette (16) passant devant.

6. Système de projection vidéo selon la revendication 5, caractérisé en ce qu'un détecteur de position (18) sensible à la lumière est disposé de manière qu'il reçoit au moins par moments le faisceau lumineux de mesure réfléchi sur une facette (16) passant devant, et de manière qu'il produise ensuite deux tensions (U₁, U₂), dont la différence est une fonction de l'inclinaison des facettes.

7. Système de projection vidéo selon la revendication 5 ou 6, caractérisé en ce que le laser est orienté de manière que le faisceau lumineux de mesure (19) s'étende dans un plan perpendiculairement à l'axe de rotation (7) du miroir polygonal (8), sous un angle différent de zéro par rapport au rayon du miroir polygonal (8), au point d'incidence (15) du faisceau lumineux de mesure (19) sur la facette.

8. Système de projection vidéo selon la revendication 6 ou 7, caractérisé en ce que le détecteur de position (18) sensible à la lumière est disposé par rapport au miroir polygonal (8) et par rapport au laser (17), de manière qu'un faisceau lumineux de mesure (20) produisant la tension différentielle zéro sur le détecteur de position, réfléchi sur une facette (16), forme un angle (β) de 90°± 10°, avec le faisceau lumineux de mesure (19) partant du laser (17).

9. Système de projection vidéo selon l'une des revendications 5 à 8, caractérisé en ce que le diamètre du faisceau lumineux de mesure (19), produit par le laser (17), est compris entre 1,5 fois et 0,5 fois le foyer sur la facette (12) produisant la déviation du faisceau lumineux (5) dévié sur le miroir polygonal.

10. Système de projection vidéo selon l'une des revendications 5 à 9, caractérisé en ce que le laser (17) est orienté de manière que le centre du faisceau lumineux de mesure, partant de celui-ci, parvient en un point de la facette (16), qui se situe à l'intérieur d'une zone de surface de la facette (16), à l'intérieur de laquelle est réfléchi aussi le faisceau lumineux (5) à dévier.

11. Système de projection vidéo selon l'une des revendications 5 à 10, caractérisé en ce que le laser (17) est disposé de manière que la facette (16), contenant le site de mesure (15) respectif, se situe dans un angle de 90°±45° dans le sens de rotation, devant la facette (12) déviant le faisceau lumineux (5), et en ce que dans le dispositif de commande (31, 36, 37, 53, 54) est prévu un circuit de temporisation (37), qui temporise l'émission de la grandeur de commande d'une durée qui est sensiblement égale à la durée nécessaire pour qu'un facette (11, 12, 16) parvienne par suite de la rotation du miroir polygonal (8), depuis le point de mesure (15) au lieu d'incidence du faisceau lumineux (5) à dévier.

12. Système de projectionvidéo selon la revendication 11, caractérisé en ce que le circuit de temporisation (32) comporte une ligne de temporisation avec durée de temporisation fixe.

13. Système de projection vidéo selon la revendication 11, caractérisé en ce que le circuit de temporisation (37) comprend un circuit numérique (50, 51, 38).

14. Système de projection vidéo selon la revendication 13, caractérisé par un circuit Sample-and-Hold (38), dans lequel les grandeurs de commande à délivrer successivement dans le temps sont mémorisées dans un parmi plusieurs emplacements de mémoire, lorsque s'applique un signal de transfert d'entrée (43), et à partir de l'emplacement de mémoire est délivrée la grandeur de commande nécessaire chaque fois pour la correction optique de l'angle d'inclinaison, lorsque s'applique un signal de réception de sortie (45), celui-ci étant temporisé par rapport au signal de transfert d'entrée, à l'aide d'un circuit numérique (50, 51).

15. Système de projection vidéo selon la revendication 13 ou 14, caractérisé en ce que le système de projection vidéo contient un circuit de production de rythme (33), qui produit les impulsions rythmées en vue de la temporisation numérique (37), à partir de la tension cumulée des deux tensions d'un détecteur de position sensible à la lumière, dans lequel la différence des deux tensions est une fonction de l'inclinaison des facettes.

16. Système de projection vidéo selon la revendication 15, caractérisé en ce que le circuit de production de rythme (33) comporte aussi un circuit de formation d'impulsions (32), en particulier par utilisation d'un comparateur ou d'une bascule de Schmitt.
